# EUROPEAN PATENT APPLICATION

(11) **EP 2 432 239 A2**
(43) Date of publication of application: **21.03.2012**
(21) Application number: 11166032.0
(22) Date of filing: 13.05.2011
(51) Int. Cl.: H04N 13/04

(54) **Method for controlling ambient brightness perceived via three-dimensional glasses by adjusting ambient brightness setting, three-dimensional glasses, and video display device thereof**

(30) Priority: 16.09.2010 TW 099131405
(71) Applicant: Acer Incorporated, New Taipei City 221 (TW)
(72) Inventor: Ko, Chueh-Pin, 221, New Taipei City (TW)
(74) Representative: Becker Kurig Straus

(57) **Abstract**

A method for controlling an ambient brightness perceived via three-dimensional (3D) glasses (102, 202, 302, 602, 702, 802, 1202) is provided. The 3D glasses (102, 202, 302, 602, 702, 802, 1202) are arranged to view stereo images presented by a video display apparatus (104, 204, 304, 404, 504, 604, 704, 904, 1004, 1204). The method includes the following steps: adjusting an ambient brightness setting of the 3D glasses (102, 202, 302, 602, 702, 802, 1202), and controlling the 3D glasses (102, 202, 302, 602, 702, 802, 1202) according to the ambient brightness setting in order to adjust the ambient brightness perceived via the 3D glasses (102, 202, 302, 602, 702, 802, 1202).

## Description

This invention relates to a method capable of controlling an ambient brightness perceived via three-dimensional (3D) glasses, 3D glasses and video display device thereof according to the pre-characterizing clauses of claims 1, 7 and 12.

With the development of the science and technology, users are pursuing three-dimensional (3D) and more real video displays rather than high quality images. There are two techniques of present 3D video display. One is to use a video display apparatus which collaborates with 3D glasses (e.g., anaglyph glasses, polarization glasses or shutter glasses), while the other is to directly use a video display apparatus without any accompanying 3D glasses.

For shutter glasses, they are widely used for a user to watch 3D video images presented on the video display apparatus. The shutter glasses include two shutter lenses, and allow user's left eye to see left-eye images and user's right eye to see right-eye images via properly switching the shutter lens between an open state and a close state. Furthermore, when the user is wearing shutter glasses, the brightness of a display area that is perceived by the user through the shutter glasses (e.g., the brightness of the 3D image the display screen displays) will possibly be different form the ambient brightness beyond the display area that is perceived by the user through the shutter glasses (i.e., the brightness of the ambient environment not belonging to the display screen). For example, the light beams of the ambient environment do not particularly undergo polarization processing. Thus, the polarizer included in the lens structure of the conventional shutter glasses will make the ambient brightness have a significant decrease. For example, when the liquid crystal layer in the lens structure of the shutter glasses is in an open state, at least 50% ambient light is filtered by the polarizer, resulting in the ambient brightness perceived by the user being only 35-40% of the original ambient brightness. That is, regarding the ambient light, the light transmission rate of the shutter lenses operated under the open state is about 35-40%.

Moreover, as to the video output apparatus (e.g., a linear polarization or circular polarization display device), the image light output of the 3D image has a certain polarization direction, and the lens structure of the shutter glasses which is used to collaborate with the video output apparatus has the same polarization direction as well. As a result, the polarizer in the lens structure of the shutter glasses will not make the brightness of the original image light output have a significant decrease. For example, when the liquid crystal layer in the lens structure of the shutter glasses is in an open state, only 10-20% of the brightness of the display area is filtered out by the polarizer, so about 65-70% of the original brightness of the display area finally reaches user's eyes. That is, regarding the image light output of the display area, the light transmission rate of the shutter lens operated under the open state is about 65-70%. Besides, since the shutter lens alternatively switches to the open state and close state rather than stays in the open state all the time, the actual shutter-open period of the shutter glasses does have impact on the brightness of the ambient environment beyond the display area that is perceived by the user via the shutter glasses. Thus, the final brightness the user feels (i.e., the light transmission rate of the shutter lens) is substantially equal to the light transmission rate of the shutter lens operated under the open state times a ratio of the shutter-open period of the shutter lens to the whole glasses period (suppose that the liquid crystal layer can filter out any incoming light beams when staying in the close state). For example, the shutter lens operated under the open state has a light transmission rate of 35% for the ambient light and has a light transmission rate of 70% for the image light output of the display area. When the ratio of the shutter-open period of the shutter lens to the whole glasses period is 16%, the final brightness of the display area the user feels is 11.2% (i.e., 70%x16%). However, the final ambient brightness the user feels is only 5.6% (i.e., 35%x16%), which causes the ambient brightness to be lower than an acceptable level.

The shutter lens control mechanism employed by the conventional shutter glasses only has the 3D image viewing taken into consideration, and does not consider the ambient brightness perceived by the user. Thus, there is no function implemented for adjusting the ambient brightness perceived by the user. When the user wearing the 3D glasses perceives insufficient ambient brightness, the user may fail to recognize objects (e.g., a keyboard or a remote control) beyond the display area of the video display apparatus clearly, leading to user's inconvenience in watching 3D images.

### Summary

This in mind, the invention aims at providing a means of automatically or manually adjusting an ambient brightness setting of 3D glasses, so that a user may receive different ambient brightness via the 3D glasses under different operating modes, leading to improved overall video viewing quality under a situation where the user wears the 3D glasses. This is achieved by a method for controlling an ambient brightness of three-dimensional (3D) glasses, and related 3D glasses and video display apparatus according to claims 1, 7 and 12, respectively. The dependent claims pertain to corresponding further developments and improvements.

As will be seen more clearly from the detailed description below, an exemplary method for controlling an ambient brightness perceived via 3D glasses is provided. The 3D glasses are utilized for viewing stereo images presented by a video display apparatus. The claimed method comprises: adjusting an ambient brightness setting of the 3D glasses, and controlling the 3D glasses according to the ambient brightness setting in order to adjust the ambient brightness perceived via the 3D glasses.

According to a second aspect of the present invention, exemplary 3D glasses for viewing stereo images presented by a video display apparatus are provided. The claimed 3D glasses comprise a left-eye lens, a right-eye lens, an adjusting circuit and a control circuit. The adjusting circuit is arranged to adjust an ambient brightness setting of the 3D glasses. The control circuit is electronically connected to the adjusting circuit, the left-eye lens and the right-eye lens in order to control the left-eye lens and the right-eye lens according to the ambient brightness setting, thereby adjusting an ambient brightness perceived via the 3D glasses.

According to a third aspect of the present invention, an exemplary video display apparatus for collaborating with the 3D glasses for viewing stereo images is provided. The claimed exemplary video display apparatus comprises a signal transmitter and a video output apparatus. The video output apparatus is arranged to transmit information to the 3D glasses via the signal transmitter. One of the signal transmitter and the video output apparatus is arranged to adjust an ambient brightness setting of the 3D glasses in order to adjust an ambient brightness perceived via the 3D glasses.

In the following, the invention is further illustrated by way of example, taking reference to the following drawings. Thereof:
FIG. 1 is a diagram of the first exemplary embodiment of the stereo image display system according to the present invention;
FIG. 2 is a diagram of the second exemplary embodiment of the stereo image display system according to the present invention;
FIG. 3 is a diagram of the third exemplary embodiment of the stereo image display system according to the present invention;
FIG. 4 is a diagram of the fourth exemplary embodiment of the stereo image display system according to the present invention;
FIG. 5 is a diagram of the fifth exemplary embodiment of the stereo image display system according to the present invention;
FIG. 6 is a diagram of the sixth exemplary embodiment of the stereo image display system according to the present invention;
FIG. 7 is a diagram of the seventh exemplary embodiment of the stereo image display system according to the present invention;
FIG. 8 is a diagram of the eighth exemplary embodiment of the stereo image display system according to the present invention;
FIG. 9 is a diagram of the ninth exemplary embodiment of the stereo image display system according to the present invention;
FIG. 10 is a diagram of the tenth exemplary embodiment of the stereo image display system according to the present invention;
FIG. 11 is a diagram of the eleventh exemplary embodiment of the stereo image display system according to the present invention;
FIG. 12 is a diagram of the twelfth exemplary embodiment of the stereo image display system according to the present invention;
FIG. 13 is a flowchart illustrating the first exemplary embodiment of the method used for controlling the ambient brightness of the 3D glasses according to the present invention; and
FIG. 14 is a flowchart illustrating the second exemplary embodiment of the method used for controlling the ambient brightness of the 3D glasses according to the present invention.

### Detailed Description

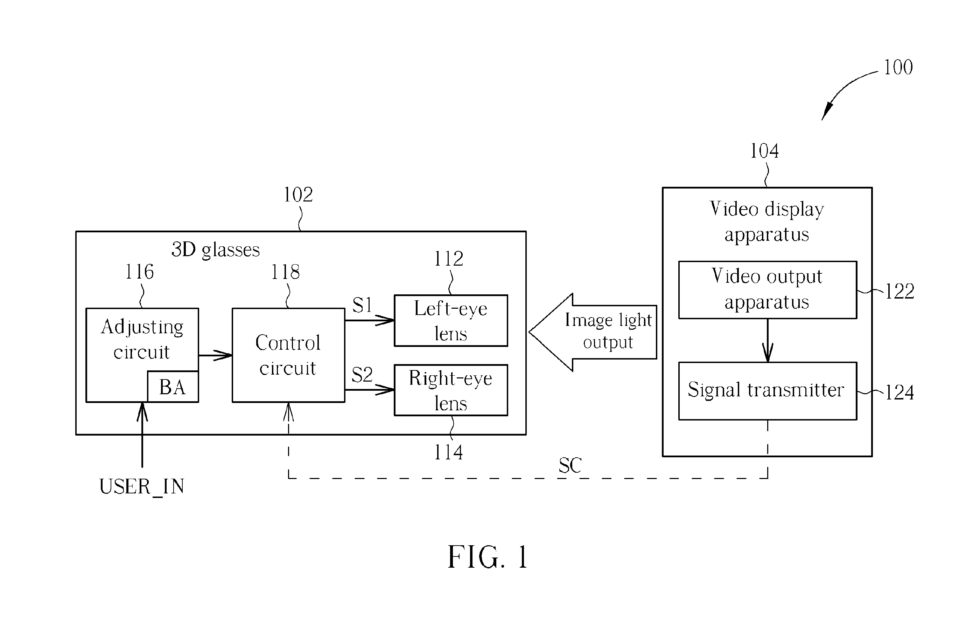

Please refer to FIG. 1, which is a diagram of the first exemplary embodiment of a stereo image display system according to the present invention. The stereo image display system 100 comprises 3D glasses 102 and a video display apparatus 104. In the present exemplary embodiment, the 3D glasses 102 comprise, but are not limited to, a left-eye lens 112, a right-eye lens 114, an adjusting circuit 116 and a control circuit 118. The video display apparatus104 comprises, but is not limited to, a video output apparatus 122 and a signal transmitter 124. The left-eye lens 112 is utilized for allowing a user to view left-eye images, and the right-eye lens 114 is utilizing for allowing the user to view right-eye images. Moreover, the adjusting circuit 116 is arranged to adjust an ambient brightness setting BA of the 3D glasses 102. In the present exemplary embodiment, the adjusting circuit116 receives a user setting USER_IN directly, and adjusts/updates the current ambient brightness setting BA according to the received user setting USER_IN. In other words, the user may manually adjust the used 3D glasses 102 according to the desired ambient brightness. The control circuit 118 is electrically connected to the left-eye lens 112, the right-eye lens 114 and the adjusting circuit116 and used for controlling the left-eye lens 112 and the right-eye lens 116 according to the ambient brightness setting BA set by the adjusting circuit 116, thereby adjusting the ambient brightness received via the 3D glasses 102 (i.e., adjusting the ambient brightness the user feels via the 3D glasses 102). In the present exemplary embodiment, the control circuit 118 generates a 3D glasses control signal, including control signals S1 and S2, according to the ambient brightness setting BA in order to control the light transmission rates of the left-eye lens 112 and the right-eye lens 114. For example, the 3D glasses 102 are shutter glasses, so the control circuit 118 outputs control signals S1 and S2 to the left-eye lens 112 and the right-eye lens114 respectively in order to control the left-eye lens 112 to switch between the open state and the close state and control the right-eye lens 114 to switch between the open state and the close state. For example, each of the left-eye lens 112 and the right-eye lens 114 has a liquid crystal layer, and each of the control signals S1 and S2 may be a control voltage utilized for controlling the rotation of liquid crystal cells (LC cells) in the liquid crystal layer in order to control the light transmission rate. Since the shutter-open period and shutter-close period of the shutter lens determine the brightness the user feels, the number of times the shutter lens entering the open state, the number of times the shutter lens entering the close state, the ratio of the shutter-open period to the shutter-close period, and/or the glasses period (i.e., the period in which the left eye and the right eye respectively view an image once) may be properly adjusted in order to achieve the objective of adjusting the ambient brightness perceived by the user. Please note that, the techniques directed to adjusting/improving the ambient brightness by switching the shutter lenses between the open state and the close state have been described the same inventor's other patent applications, such as Taiwanese patent application No. 099122343, Taiwanese patent application No. 099124293, and Taiwanese patent application No. 099126274. The whole contents of the counterpart U.S. patent applications, which claim the benefit of Taiwanese patent application No. 099122343, Taiwanese patent application No. 099124293, and Taiwanese patent application No. 099126274 respectively, are incorporated herein by reference. Further description of the techniques directed to adjusting/improving the ambient brightness is therefore omitted for brevity.

Please note that the above is for illustrative purposes only and should not be regarded as a limitation to the present invention. For example, any construction capable of controlling the light transmission rate may be used to realize the left-eye lens 112 and the right-eye lens 114, thereby achieving the same objective of controlling the ambient brightness perceived via the 3D glasses 102 (i.e., the ambient brightness perceived by the user via the 3D glasses 102). Moreover, the 3D glasses 102 are not limited to shutter glasses. That is, any glasses utilized for viewing stereo images and having the function of adjusting the ambient brightness may be used, which also obeys the spirit of the present invention.

The 3D glasses 102 are utilized by the user for viewing stereo images presented by the video output apparatus 122. For example, in the first exemplary embodiment shown in FIG. 1, the video output apparatus 122 may be a liquid crystal display having a display screen (e.g., a liquid crystal display panel) and a backlight module. The backlight module provides light source the display screen needed, and the 3D glasses 102 control whether the image light output generated by the display screen can reach the user's left eye or right eye. Please note that the video output apparatus 122 is not limited to a liquid crystal display. That is, the video output apparatus 122 may also be any video output apparatus which is utilized for collaborating with 3D glasses 102 in order to display stereo images for users. For example, the video output apparatus 122 may be an organic light-emitting diode (OLED) display, a plasma display, a display/projector using digital light processing (DLP) technology, or a display/projector using liquid crystal on silicon (LCoS) technology. In other words, if the 3D glasses 102 are shutter glasses, the video output apparatus 122 may be any display or projector with a polarization characteristic (e.g., linear polarization or circular polarization) that is capable of collaborating with the 3D glasses.

As to the example of using shutter glasses as the 3D glasses 102, the control circuit 118 can properly control the left-eye lens 112 and the right-eye lens 114 to switch between the open state and the close state, thereby adjusting the ambient brightness perceived by the user who wears the shutter glasses without disturbing user's viewing of stereo images. As shown in FIG. 1, the video output apparatus 122 communicates with the 3D glasses 102 via the signal transmitter 124. For example, the 3D glasses 102 (e.g., shutter glasses) receives the reference information SC generated from the signal transmitter 124 of the video output apparatus 122 via wired transmission or wireless transmission (e.g., infrared transmission, ZigBee transmission, ultrawideband (UWB) transmission, WiFi transmission, radio frequency (RF) transmission, DLP optical signal transmission or Bluetooth transmission),and then the control circuit 118 generates the needed control signals S1 and S2 according to the reference information SC and the ambient brightness setting BA. For example, the reference information SC may be a sequence of video images outputted by the video output apparatus 122, and the control circuit 118 may generate needed control signals S1 and S2 by itself according to the reference information SC and the ambient brightness setting BA. In other words, the video output apparatus 122 only provides synchronization signals rather than the control setting which defines the time points that the left-eye lens 112 and right-eye lens 114 enters the open state or the close state. Besides, the reference information SC can directly be the control setting of the left-eye lens 112 and the right-eye lens 114, and the control circuit 118 itself generates the corresponding control signals S1 and S2 by simply adjusting the received reference information SC according to the ambient brightness setting BA set by the adjusting circuit 116. Please note that the signal transmitter 124 in the present exemplary embodiment is externally connected to the video output apparatus (e.g., display/projector); however, it may be integrated/built inside the video output apparatus (e.g., display/projector).

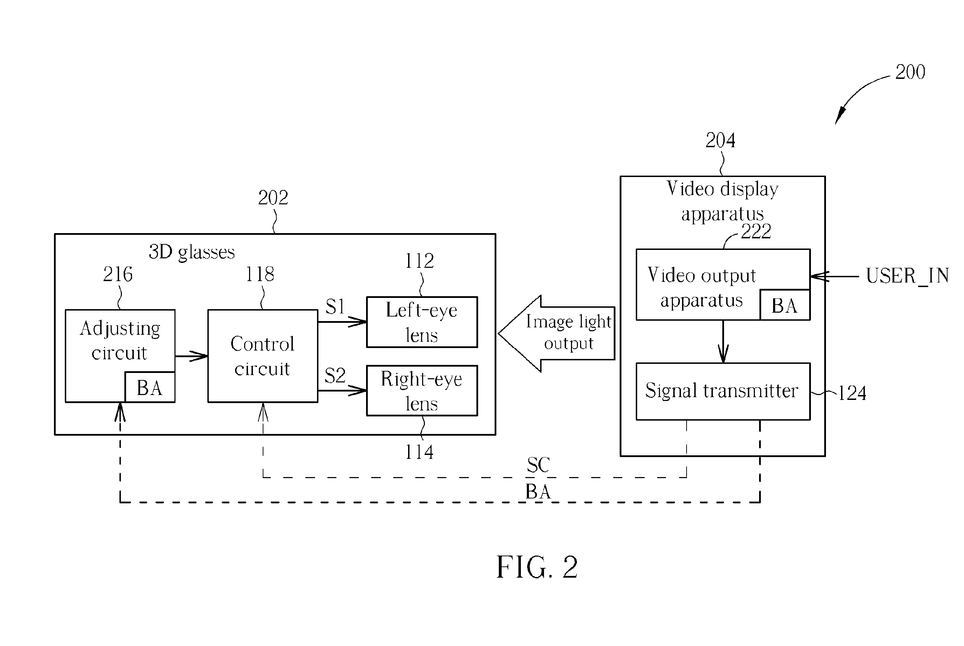

Please refer to FIG. 2, which is a diagram of the second exemplary embodiment of a stereo image display system according to the present invention. The stereo image display system 200 comprises 3D glasses 202 and a video display apparatus 204. The stereo image display system 200 shown in FIG. 2 is similar to the stereo image display system 100 shown in FIG. 1, and the major difference is the implementation of the adjusting circuit 216 and the video output apparatus 222. In the present exemplary embodiment, the video output apparatus 222 is further arranged to receive a user setting USER_IN directly, and adjust the ambient brightness setting BA according to the received user setting USER_IN. Besides, the video output apparatus 222 is further arranged to transmit the adjusted ambient brightness setting BA to 3D glasses 202. The adjusting circuit 216 is therefore arranged to adjust/update the current ambient brightness setting BA passively according to the received ambient brightness setting BA. In other words, the adjusting circuit 216 may be regarded as a storage component used for storing the ambient brightness setting BA. In brief, the user may manually adjust the ambient brightness setting on video output apparatus 222 according to the brightness setting needed when wearing 3D glasses 102. For example, the user can make an adjustment as needed via on-screen display (OSD). Since those skilled in the art will readily understand functions and operations of other components included in the stereo image display system 200 shown in FIG. 2 according to the above paragraphs directed to the stereo image display system 100 shown in FIG. 1, further description is omitted here for brevity.

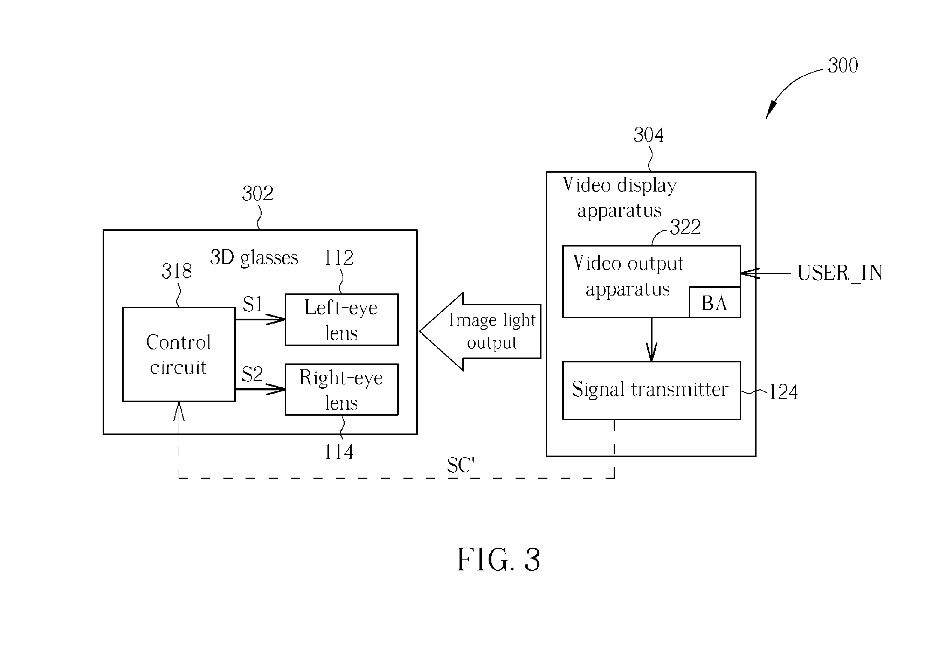

Please refer to FIG. 3, which is a diagram of the third exemplary embodiment of a stereo image display system according to the present invention. The stereo image display system 300 comprises 3D glasses 302 and a video display apparatus 304. The stereo image display system 300 shown in FIG. 3 is similar to the stereo image display system 200 shown in FIG. 2, and the major difference is that there is no adjusting circuit in the 3D glasses 302. Therefore, in the present exemplary embodiment, the video output apparatus 322 is not only arranged to receive a user setting USER_IN directly and adjust an ambient brightness setting BA according to the received user setting USER_IN, but also arranged to generate a 3D glasses control setting SC' according to the ambient brightness setting BA (e.g., generating the 3D glasses control setting SC' by adjusting a default control setting according to the current ambient brightness setting BA), and further transmit the 3D glasses control setting SC' to the 3D glasses 302 via the signal transmitter 124. Please note that the 3D glasses control setting is the control setting of the left-eye lens 112 and the right-eye lens 114 directly, so the control circuit 318 simply generates corresponding control signals S1 and S2 according to the received 3D glasses control setting SC'. In brief, the user can manually make an adjustment on the video output apparatus 322 according to the needed ambient brightness when wearing the 3D glasses 102. For example, the user can make a manual adjustment according to his/her need via on-screen display (OSD). The video display apparatus 304 directly generates corresponding 3D glasses control setting SC' to 3D glasses 302. Since those skilled in the art will readily understand functions and operations of other components in the stereo image display system 300 shown in FIG. 3 after reading above paragraphs directed to the stereo image display systems 100 and 200 respectively shown in FIG. 1 and FIG. 2, further description is omitted here for brevity.

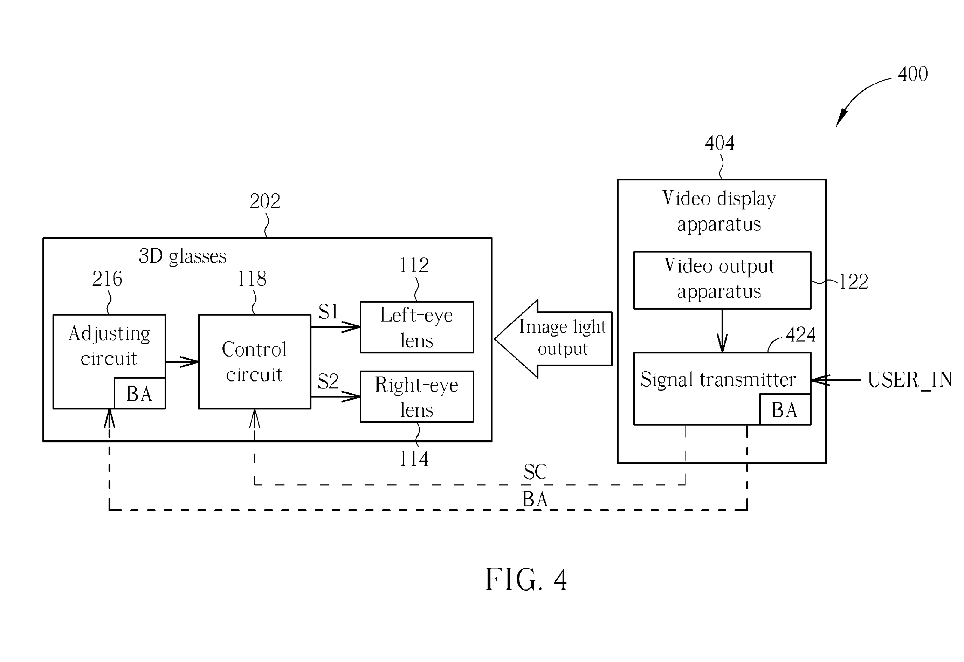

Please refer to FIG. 4, which is a diagram of the fourth exemplary embodiment of a stereo image display system according to the present invention. The stereo image display system 400 comprises 3D glasses 202 and a video display apparatus 404. The stereo image display system 400 shown in FIG. 4 is similar to the stereo image display system 200 shown in FIG. 2, and the major difference is the signal transmitter 424. In the present exemplary embodiment, the signal transmitter 424 is further used for receiving a user setting USER_IN directly and adjusting the ambient brightness setting BA according to the received user setting USER_IN. Besides, the signal transmitter 424 is further used for transmitting the adjusted ambient brightness setting BA to 3D glasses 202. The adjusting circuit 216 is therefore arranged to adjust/update the current ambient brightness setting BA according to the received ambient brightness setting BA. In the same way, the adjusting circuit216 can be merely regarded as a storage component utilized for storing the ambient brightness setting BA. Moreover, the signal transmitter 424 proposed in the present invention is externally connected to the video output apparatus (e.g., a display/projector); however, it may be integrated/built inside the video output apparatus (e.g., a display/projector). In brief, the user can make a manual adjustment on the signal transmitter 424 according to the needed ambient brightness when wearing the 3D glasses 202. Since those skilled in the art will readily understand functions and operations of other components in the stereo image display system 400 shown in FIG. 4 after reading above paragraphs directed to the stereo image display systems 100 and 200 respectively shown in FIG. 1 and FIG. 2, further description is omitted here for brevity.

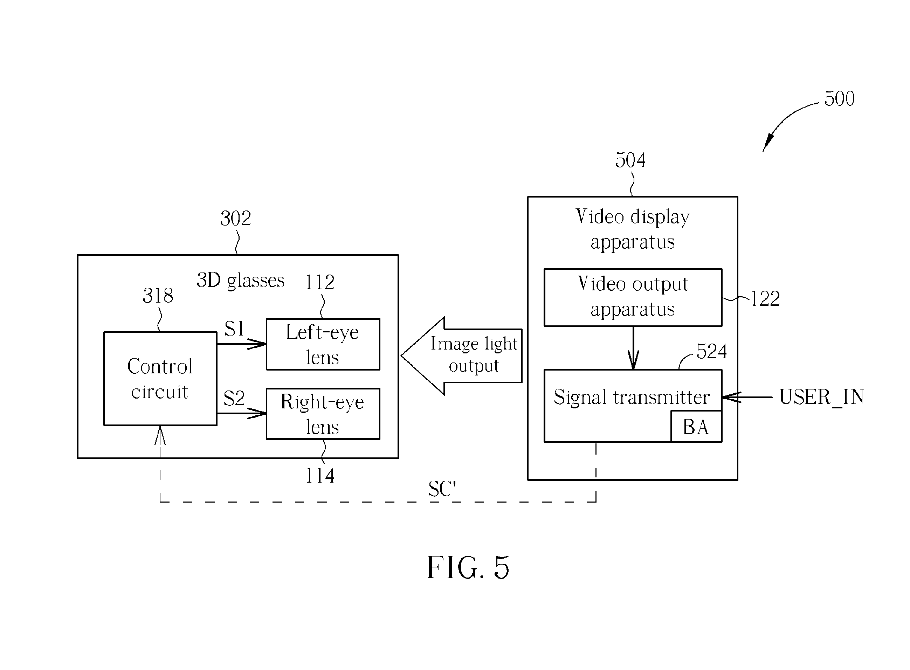

Please refer to FIG. 5, which is a diagram of the fifth exemplary embodiment of a stereo image display system according to the present invention. The stereo image display system 500 comprises 3D glasses 302 and a video display apparatus 504. The stereo image display system 500 shown in FIG. 5 is similar to the stereo image display system 300 shown in FIG. 3, and the major difference is the signal transmitter 524. Therefore, in the present exemplary embodiment, the signal transmitter 524 not only receives the user setting USER_IN directly for adjusting the ambient brightness setting BA according to the received user setting USER_IN, but also generates a 3D glasses control setting SC' according to the ambient rightness setting BA and further transmits the 3D glasses control setting SC' to the 3D glasses 302. For example, the video output apparatus 122 provides a default control setting of the left-eye lens 112 and the right-eye lens 114, and the signal transmitter 524 adjusts the default control setting according to the ambient brightness setting BA set by the user setting USER_IN and accordingly generates and transmits the 3D glasses control setting SC' to the 3D glasses 302. Please note that the 3D glasses control setting SC' is exactly the control setting of the left-eye lens 112 and the right-eye lens 114, so the control circuit 318 simply generates corresponding control signals S1 and S2 according to the received 3D glasses control setting SC'. Besides, the signal transmitter 524 of the present exemplary embodiment is externally connected to the video output apparatus (e.g., a display/projector); however, it may be integrated/built inside the video output apparatus (e.g., a display/projector). In brief, the user can make a manual adjustment on the signal transmitter 524 according to the needed ambient brightness when wearing the 3D glasses 302. Since those skilled in the art will readily understand functions and operations of other components in the stereo image display system 500 shown in FIG. 5 after reading above paragraphs directed to the stereo image display systems 100 and 300 respectively shown in FIG. 1 and FIG. 3, further description is omitted here for brevity.

The exemplary embodiments described above provide manual adjusting mechanisms for users to adjust the perceived ambient brightness according to their needs when wearing the 3D glasses. However, besides the manual adjusting mechanism, an automatic adjusting mechanism is feasible. By adopting the automatic adjusting mechanism, the ambient brightness perceived via 3D glasses can be properly adjusted automatically without user's intervention.

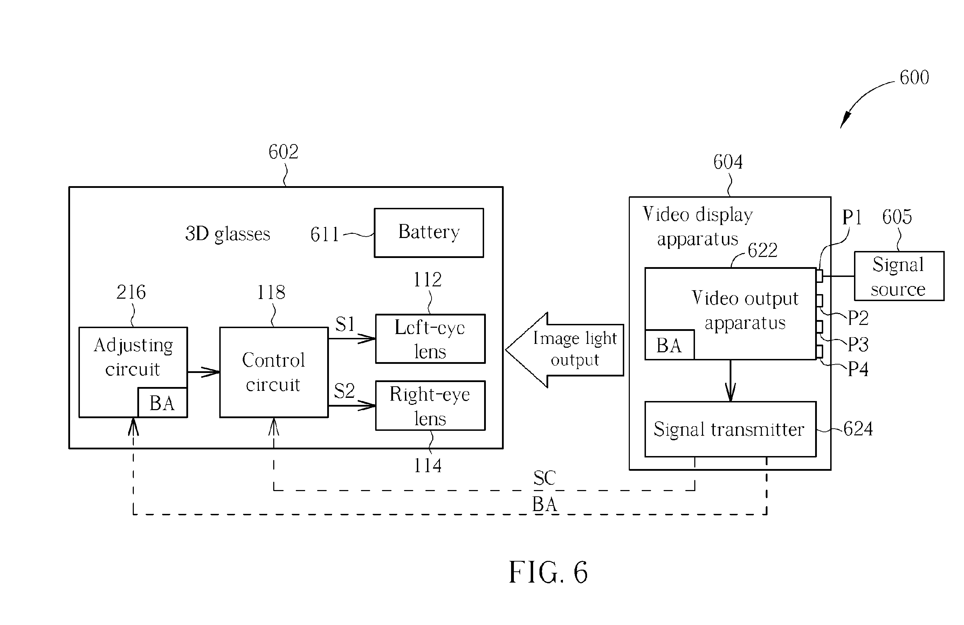

Please refer to FIG. 6, which is a diagram of the sixth exemplary embodiment of a stereo image display system according to the present invention. The stereo image display system 600 comprises 3D glasses 602 and a video display apparatus 604. The stereo image display system 600 shown in FIG. 6 is similar to the stereo image display system 200 shown in FIG. 2, and the major difference is that the video output apparatus 622 is arranged to generate an estimating result by estimating an operating state of the video display apparatus 604 or 3D glasses 602, and adjust the ambient brightness setting BA of the 3D glasses 602 according to the estimating result. Besides, the adjusted ambient brightness setting BA is transmitted to the 3D glasses 602 via the signal transmitter 624, and the adjusting circuit 216 is therefore arranged to adjust/update the current ambient brightness setting BA according to the received ambient brightness setting BA. The signal transmitter 624 of the present exemplary embodiment is externally connected to the video output apparatus (e.g., a display/projector); however, it may be integrated/built inside the video output apparatus (e.g., a display/projector).

Suppose that the video output apparatus 622 is arranged to generate an estimating result by estimating the operating state of the video display apparatus 604. In the first exemplary implementation, the video output apparatus 622 may generate the estimating result according to the video content to be displayed on the video output apparatus 622. That is, the video output apparatus 622 provides different setting values to the ambient brightness setting BA in response to different kinds of video contents to be displayed on the video output apparatus 622. Since different kinds of video contents stand for different usage of the stereo image display system 600, the video output apparatus 622 therefore can automatically adjust the ambient brightness setting BA according to the estimating result, and provide a proper setting value to the ambient brightness setting BA in order to offer the user a proper ambient brightness feeling when the user wears the 3D glasses 602. For example, when the user views stereoscopic film by means of the stereo image display system 600, he/she may need to clearly see the video content displayed on the screen rather than the surroundings beyond the screen. Thus, the ambient brightness setting BA may be set by a first setting value in order to make the 3D glasses 602 operate under a first operating mode. When the user views a stereoscopic TV program by means of the stereo image display system 600, he/she may need to clearly see the video content on the screen as well as the surroundings beyond the screen (e.g., family members or friends). Thus, the ambient brightness setting BA may be set by a second setting value in order to make the 3D glasses 602 operate under a second operating mode. When the user plays stereoscopic games by means of the stereo image display system 600, he/she may need to use 3D glasses 602 for a long time (as shown in FIG. 6, the battery 611 offers operating power of 3D glasses 602) and clearly see the surroundings beyond the screen (e.g., a gamepad or keyboard). Thus, the ambient brightness setting BA may be set by a third setting value in order to make the 3D glasses 602 operate under a third operating mode. When the stereo image display system 600 is utilized by the user for viewing or drawing a stereo image, the user needs to clearly see the stereo image on the screen as well as the surroundings beyond the screen (e.g., documents or files). Thus, the ambient brightness setting BA may be set by a fourth setting value in order to make the 3D glasses 602 operate under a fourth operating mode.

As mentioned above, different kinds of video contents stand for different usage of the stereo image display system 600. Therefore, the video output apparatus 622 needs different setting values for the ambient brightness setting BA. The usage of the stereo image display system 600 can be estimated according to the video content to be displayed on the video output apparatus 622. For example, the video output apparatus 622 is arranged to generate the estimating result according to the format of the video file displayed thereon (for example, when the file extension is avi, it means that the user is viewing a stereoscopic film by means of the stereo image display system 600, and when the file extension is jpg, it means that the user is viewing or drawing a stereo image by means of the stereo image display system 600), or the playback program of the video file (for example, when the application program interface of DirectX is run, it means that the user is playing a stereoscopic game by means of the stereo image display system 600, and when the multimedia player is run, it means that the user is viewing a stereoscopic film by means of the stereo image display system 600), or the file size/playback time of the video file (for example, if the file size of the video file is larger than 2GB, it means that the user is viewing a stereoscopic film by means of the stereo image display system 600, and if the file size of the video file is smaller than 1 MB, it means that the user is viewing or drawing a stereo image by means of the stereo image display system 600). However, these are for illustrative purposes only, and are not mean to be limitations to the present invention.

Suppose that the video output apparatus 622 is arranged to generate the estimating result by estimating the operating state of the video display apparatus 604. In the second exemplary implementation, the video output apparatus 622 can generate the estimating result according to a data transmitting interface that provides the video content to be displayed on the video output apparatus 622. As shown in FIG. 6, in the present exemplary embodiment, the video output apparatus 622 has a plurality of data transmitting interfaces (e.g., data transmitting interfaces P1-P4), wherein a signal source is connected to the data transmitting interface P1 in order to provide the video content to be displayed on the video output apparatus 622. It should be noted that FIG. 6 only shows four data transmitting interfaces for simplicity and clarity. By way of example, data transmitting interfaces P1-P4 include data transmitting interfaces of different interface standards, such as a universal serial bus (USB) interface, a high-definition multimedia interface (HDMI), a network interface and a TV signal input interface. Thus, if the data transmitting interface P1 connected to the signal source 605 is a USB interface, it means that the user probably views or draws a stereo image by means of the stereo image display system 600. Thus, the video output apparatus 622 provides the fourth setting value to the ambient brightness setting BA in order to make the 3D glasses 602 operate under the fourth operating mode. If the data transmitting interface P1 connected to the signal source 605 is an HDMI interface, it means that the user probably views a stereoscopic film by means of the stereo image display system 600. Thus, the video output apparatus 622 provides the first setting value to the ambient brightness setting BA in order to make the 3D glasses 602 operate under the first operating mode. If the data transmitting interface P1 connected to the signal source605 is a network interface or a TV signal input interface, it means that the user probably views a stereoscopic TV program by means of the stereo image display system 600. Thus, the video output apparatus 622 provides the second setting value to the ambient brightness setting BA in order to make the 3D glasses 602 operate under the second operating mode. Please note that the description mentioned above is only for illustrative purposes, and is not meant to be a limitation to the present invention.

Besides, in another exemplary embodiment, data transmitting interfaces P1-P4 may include a plurality of data transmitting interfaces of the same interface standard. For example, data transmitting interfaces P1-P4 are HDMI interfaces respectively and utilized for connecting different signal sources for the video output apparatus 622. For example, if the data transmitting interface P1 connected to the signal source 605 is the first HDMI interface, it means that the user is playing a stereoscopic game by means of the stereo image display system 600. Thus, the video output apparatus 622 provides the third setting value to the ambient brightness setting BA in order to make the 3D glasses 602 operate under the third operating mode. If the data transmitting interface P1 connected to the signal source605 is the second HDMI interface, it means that the user probably views a stereoscopic film by means of the stereo image display system 600. Thus, the video output apparatus 622 provides the first setting value to the ambient brightness setting BA in order to make the 3D glasses 602 operate under the first operating mode. If the data transmitting interface P1 connected to the signal source605 is the third or the fourth HDMI interface, it means that the user is probably viewing a stereoscopic TV program by means of the stereo image display system 600. Thus, the video output apparatus 622 provides the second setting value to the ambient brightness setting BA in order to make the 3D glasses 602 operate under the second operating mode. Please note that the description mentioned above is only for illustrative purposes, and is not meant to be a limitation to the present invention.

Suppose that the video output apparatus 622 is arranged to generate the estimating result by estimating the operating state of the video display apparatus 604. In the third exemplary implementation, the video output apparatus 622 can generate the estimating result according to the signal source that provides the video content to be displayed on the video output apparatus 622. For example, if the signal source 605 is an optical disc player (e.g., a Blue-ray disc player), it means that the user probably views a stereoscopic films by means of the stereo image display system 600. Thus, the video output apparatus 622 provides the first setting value to the ambient brightness setting BA in order to make the 3D glasses 602 operate under the first operating mode. If the signal source 605 is a video game console, it means that the user probably plays a stereoscopic game by means of the stereo image display system 600. Thus, the video output apparatus 622 provides the third setting value to the ambient brightness setting BA in order to make the 3D glasses 602 operate under the third operating mode. If the signal source 605 is a computer host, it means that the user probably views or draws a stereo image by means of the stereo image display system 600. Thus, the video output apparatus 622 provides the fourth setting value to the ambient brightness setting BA in order to make the 3D glasses 602 operate under the fourth operating mode. Please note that the description mentioned above is only for illustrative purposes, and is not meant to be a limitation to the present invention.

Besides, in the exemplary embodiment shown in FIG. 6, the video content to be displayed on the video output apparatus 622 is offered by the external signal source 605. However, the video content to be displayed on the video output apparatus 622 may also be offered by an internal signal source (e.g., a built-in storage or optical disc drive) of the video output apparatus 622. Thus, the first exemplary implementation described above (i.e., the implementation in which the video output apparatus 622 is arranged to generate the estimating result according to the video content to be displayed on the video output apparatus 622) may be utilized for adjusting the ambient brightness setting BA automatically.

Suppose that the video output apparatus 622 is arranged to generate the estimating result by estimating the operating state of the 3D glasses 602. In the first exemplary implementation, the video output apparatus 622 can generate the estimating result according to power supply information of the 3D glasses 602. For example, the video output apparatus 622 itself has an internal timer in order to count the using time of the 3D glasses 602, and decides how to adjust the ambient brightness setting BA according to the using time. For example, if the 3D glasses 602 are shutter glasses and the fully charged battery 611 can only maintain 40-hour regular operation of the shutter glasses. When the shutter glasses has been used for 38 hours, the timer function of the video output apparatus 622 knows that the electric power left in the battery611 can only allow the shutter glasses to work normally for 2 hours. Generally speaking, if there is no voltage imposed on the liquid crystal layer, the shutter lens stays in the open state and allows light beams to penetrate therethrough. Therefore, the video output apparatus 622 may adjust the ambient brightness setting BA in order to prolong the shutter-open period of the shutter glasses (i.e., increase the ambient brightness perceived by the user via shutter glasses), thereby decreasing the power consumption of the shutter glasses and prolonging the using time of the shutter glasses.

Besides, when adjusting the ambient brightness setting BA, the video output apparatus 622 can refer to the estimating result of the power supply information of the 3D glasses 602 as well as the estimating result of the video content to be displayed on the video display apparatus604. For example, before the video display apparatus 604 starts playing the video content (e.g., a movie film), the timer function of the video output apparatus 622 knows the electric power left in the battery 611 that can only allow the 3D glasses 602 (e.g., shutter glasses) to work normally for 2 hours, and the length of the video content (e.g., a movie film) to be displayed is 3 hours. Then the video output apparatus 622 adjusts the ambient brightness setting BA in order to prolong the shutter-open period of the shutter glasses (i.e., increase the ambient brightness perceived by the user via shutter glasses), thereby decreasing the power consumption of the shutter glasses to allow the user to successfully finish viewing the video content displayed on the video display apparatus 604.

Since those skilled in the art will readily understand functions and operations of other components in the stereo image display system 600 shown in FIG. 6 after reading above paragraphs directed to the stereo image display systems 100 and 200 respectively shown in FIG. 1 and FIG. 2, further description is omitted here for brevity.

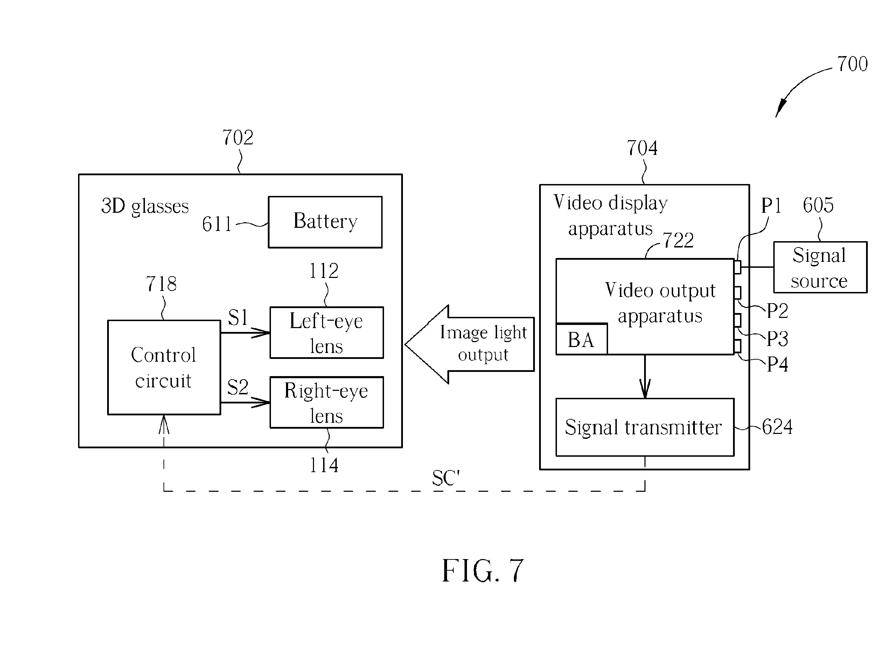

Please refer to FIG. 7, which is a diagram of the seventh exemplary embodiment of a stereo image display system according to the present invention. The stereo image display system 700 comprises 3D glasses 702 and a video display apparatus 704. The stereo image display system 700 shown in FIG. 7 is similar to the stereo image display system 600 shown in FIG. 6, and the major difference is that there is no adjusting circuit in the 3D glasses 702. Thus, in the present exemplary embodiment, the video output apparatus 722 can be utilized for not only adjusting the ambient brightness setting BA of 3D glasses 602 by estimating the operating state of the video display apparatus 604 or 3D glasses 602, but also generating a 3D glasses control setting SC' according to the ambient brightness setting BA and transmitting the 3D glasses control setting SC' to the 3D glasses 703 via the signal transmitter 624. By way of example, the video output apparatus 722 adjusts a default control setting according to the current ambient brightness setting BA and accordingly generates the 3D glasses control setting SC'. Please note that the 3D glasses control setting SC' is exactly the control setting of the left-eye lens 112 and the right-eye lens 114. Thus, the control circuit 718 generates corresponding control signals S1 and S2 simply according to the 3D glasses control setting SC'. Since those skilled in the art will readily understand functions and operations of other components in the stereo image display system 700 shown in FIG. 7 after reading above paragraphs directed to the stereo image display systems 100, 300 and 600 respectively shown in FIG. 1, FIG. 3 and FIG. 6, further description is omitted here for brevity.

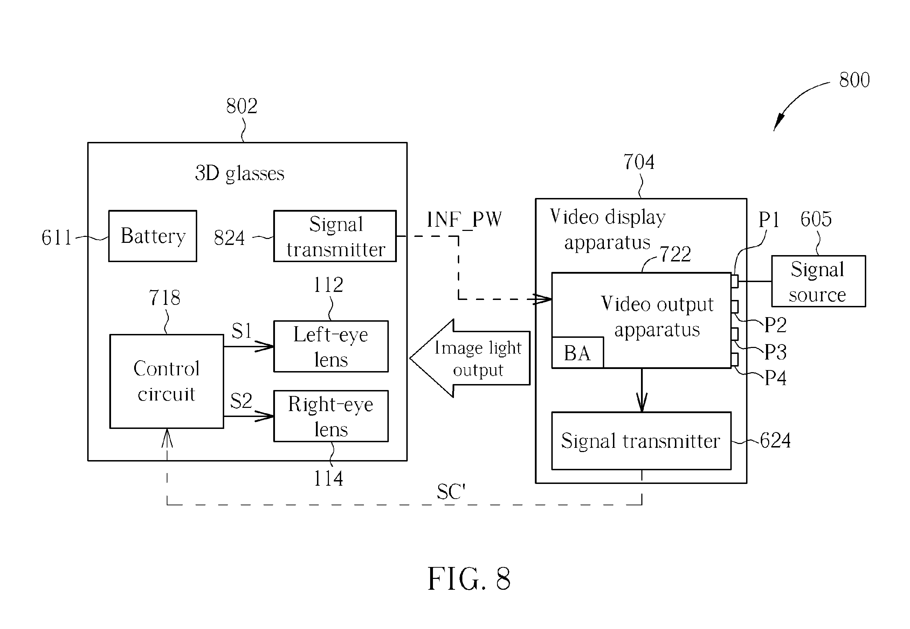

As described above, the video output apparatus 722 can generate an estimating result according to power supply information of the 3D glasses 602 (for example, the video output apparatus 722 has an internal timer in order to count the using time of 3D glasses 602), and generates the 3D glasses control setting SC' to 3D glasses 702 according to the estimating result. However, in another exemplary embodiment, the power supply information of the 3D glasses can also be offered to the video output apparatus by the 3D glasses. Please refer to FIG. 8, which is a diagram of the eighth exemplary embodiment of a stereo image display system according to the present invention. The stereo image display system 800 comprises 3D glasses 802 and a video display apparatus 804. The stereo image display system 800 shown in FIG. 8 is similar to the stereo image display system 700 shown in FIG. 7, and the major difference is that the 3D glasses 802 further have a signal transmitter 804 used to transmit power supply information INF_PW of the 3D glasses 802 to the video display apparatus 704 via wired or wireless transmission (e.g., infrared transmission, ZigBee transmission, ultrawideband (UWB) transmission, WiFi transmission, radio frequency (RF) transmission, DLP light signal transmission or Bluetooth transmission). For example, the 3D glasses 802 have an internal timer utilized for counting the using time of 3D glasses 802 in order to generate power supply information INF_PW which is needed by the video output apparatus 722 to determine the ambient brightness setting BA. Since those skilled in the art will readily understand functions and operations of other components in the stereo image display system 800 shown in FIG. 8 after reading above paragraphs directed to the stereo image display systems 100, 300, 600 and 700 respectively shown in FIG. 1, FIG. 3, FIG. 6 and FIG. 7, further description is omitted here for brevity.

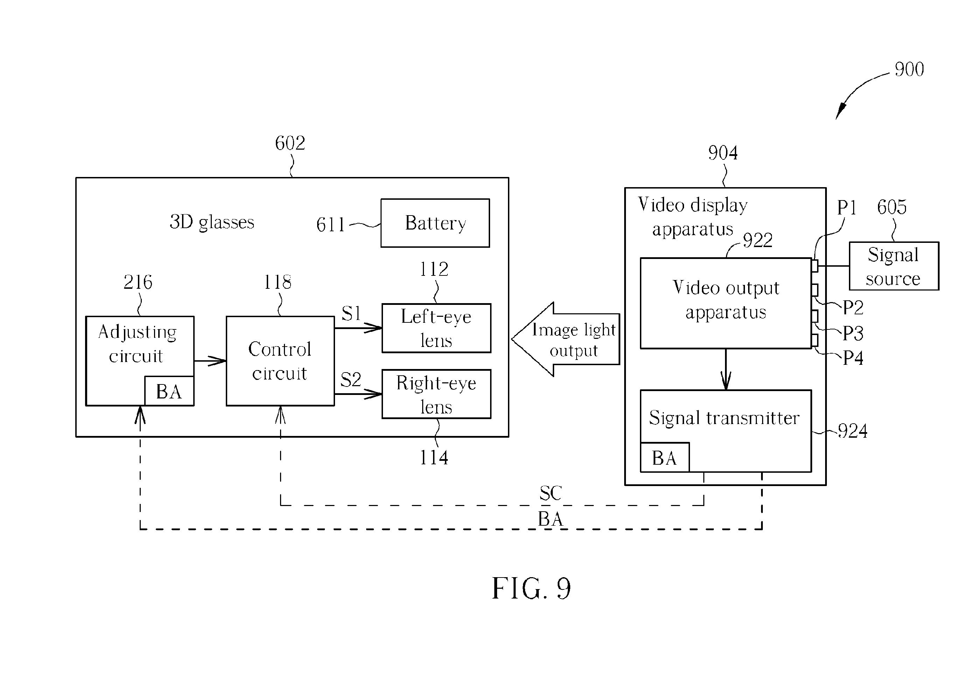

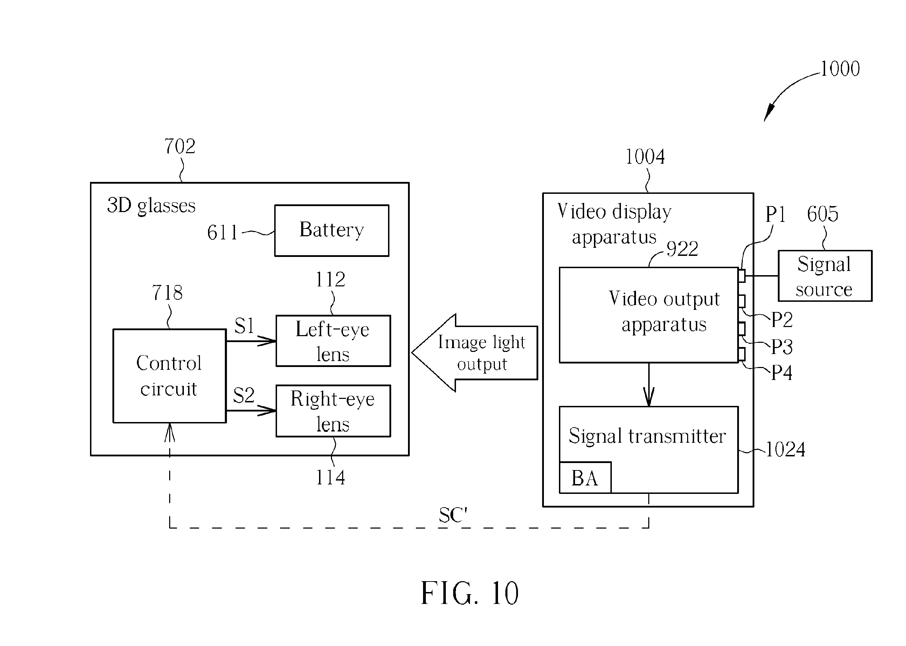

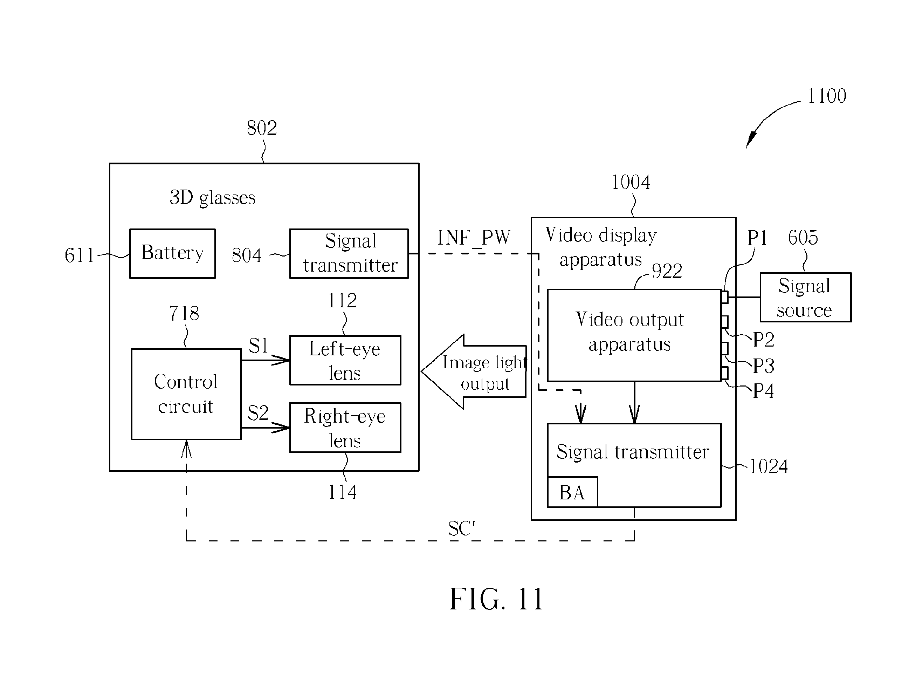

In the stereo image display systems 600, 700 and 800 respectively shown in FIG. 6, FIG. 7 and FIG. 8, the video output apparatuses 622 and 722 are arranged to generate the estimating result by estimating the operating state of the video display apparatus or 3D glasses, and adjust the ambient brightness setting according to the estimating result. However, in other exemplary embodiment, the external signal transmitter of the video output apparatus may be utilized for estimating the operating state of the video display apparatus or 3D glasses via a proper design, and the ambient brightness setting is therefore adjusted according to the estimating result. Please refer to FIG. 9, FIG. 10 and FIG. 11, which are diagrams of the ninth exemplary embodiment, the tenth exemplary embodiment and the eleventh exemplary embodiment of a stereo image display system according to the present invention. For example, each of the signal transmitters 924 and 1024 can refer to related information offered by the video output apparatus 922 to estimate a video content to be displayed on the video output apparatus 922, determine the data transmitting interface that provides the content to be displayed on the video output apparatus 922, or determine the signal source that provides the content to be displayed on the video output apparatus 922. Besides, each of the signal transmitters 924 and 1024 can also have a timer implemented therein for performing the timing function to estimate power supply information of the 3D glasses 602/702; alternatively, the 3D glasses 802 transmit power supply information INF_PW to the video display apparatus 1004 via the signal transmitter 804. For example, 3D glasses 802 have an internal timer utilized for counting the using time of 3D glasses 802 in order to generate power supply information INF_PW which is needed by the signal transmitter 1024 to determine the ambient brightness setting BA. Therefore, the signal transmitters 924 and 1024 can determine how to set the ambient brightness setting BA of 3D glasses 602, 702 and 802 by using the same adjusting mechanism as used in the video output apparatuses 622 and 722 shown in FIG. 6, FIG. 7, and FIG. 8. Besides, each of the signal transmitters 924 and 1024 is externally connected to the video output apparatus (e.g., a display/projector); however, it may be integrated/built inside the video output apparatus (e.g., a display/projector). Since those skilled in the art will readily understand functions and operations of other components in the stereo image display systems 900, 1000, and 1100 respectively shown in FIG. 9, FIG. 10 and FIG. 11 after reading above paragraphs directed to the stereo image display systems 600, 700 and 800 respectively shown in FIG. 6, FIG. 7 and FIG. 8, further description is omitted here for brevity.

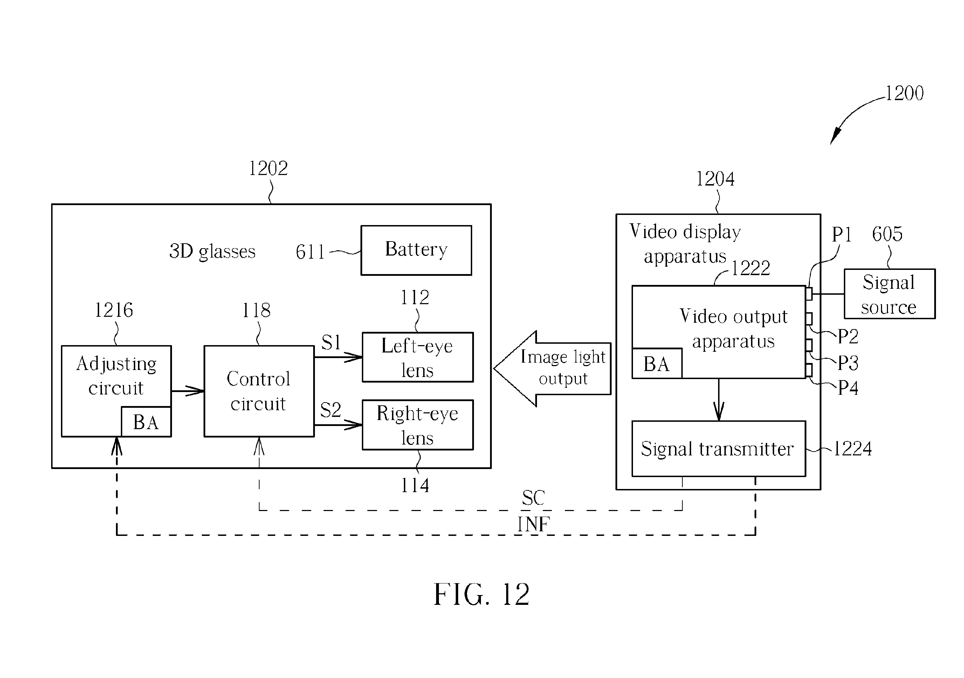

In the stereo image display systems 600-1100 shown in FIG. 6-FIG. 11, the video display apparatuses 604-1004 adjust the ambient brightness of 3D glasses automatically via the operating state of the video display apparatus or the 3D glasses. However, in other exemplary embodiment having a proper design, the 3D glasses may be configured to estimate the operating state of the video display apparatus or the operating state of the 3D glasses, and adjust the ambient brightness setting according to the estimating result. Please refer to FIG. 12, which is a diagram of the twelfth exemplary embodiment to a stereo image display system according to the present invention. The stereo image display system 1200 comprises 3D glasses 1202 and a video display apparatus 1204. The stereo image display system 1200 shown in FIG. 12 is similar to the stereo image display systems 600 and 900 shown in FIG. 6 and 9, and the major difference is that the 3D glasses themselves control the automatic adjustment applied to the ambient brightness setting. For example, the video output apparatus 1222 can transmit related information INF to the 3D glasses 1202 via the signal transmitter 1224, and the adjusting circuit 1216 can refer to the related information INF to estimate a video content to be displayed on the video output apparatus 1222, determine the data transmitting interface that provides the video content to be displayed on the video output apparatus 1222, or determine the signal source that provides the video content to be displayed on the video output apparatus 1222. Besides, the adjusting circuit 1216 can also estimate power supply information of the 3D glasses 1202. For example, the adjusting circuit 1216 has a timer implemented therein for performing the timer function used to estimate power supply information of the 3D glasses 1202 (e.g., the battery using time of the 3D glasses 1202). Thus, if 3D glasses 102 are shutter glasses, the adjusting circuit 1216 estimates that the length of the video content to be displayed on the video output apparatus 1222 is 2 hours, the playback status indicates that the video content has been played back for 1 hour, and the adjusting circuit 1216 refers to the timer function to know that the electric power left in the battery 611 can only allow the 3D glasses 1202 to work normally for half an hour, the adjusting circuit 1216 is therefore arranged to adjust the ambient brightness setting BA automatically to prolong the shutter-open period of the 3D glasses (i.e., increase the ambient brightness perceived by the user via shutter glasses), thereby decreasing the power consumption of the shutter glasses to allow the user to successfully finish viewing the video content to be displayed on the video display apparatus 1204.

The adjusting circuit 1216 can determine how to set the ambient brightness setting BA of 3D glasses by adopting the same adjusting mechanism as used in the video output apparatuses 622 and 722 shown in FIG. 6 and FIG. 7. Since those skilled in the art will readily understand functions and operations of other components in the stereo image display system 1200 shown in FIG. 12 after reading above paragraphs directed to the stereo image display systems 600 and 700 respectively shown in FIG. 6 and FIG. 7, further description is omitted here for brevity.

Please note that, in the exemplary embodiments shown in FIG. 6-FIG. 12, the 3D glasses 602, 702, 802 and 1202 are powered by the battery 611; however, it is not meant to be a limitation to the present invention. That is, the 3D glasses collaborating with the video output apparatus (e.g., a display or a projector) can also be powered by an external power supply (e.g., a wall outlet) which delivers electric power via a wired means. Similarly, the aforementioned manual adjusting mechanism may be employed to allow the user to adjust the ambient brightness perceived via the 3D glasses according to his/her need. For example, the user setting USER_IN is directly received and used for adjusting/updating the current ambient brightness setting. Alternatively, the aforementioned automatic adjusting mechanism may be employed to automatically apply a proper adjustment to the ambient brightness perceived via 3D glasses. For example, the operating state of the video display apparatus is estimated for determining how to adjust/update the current ambient brightness setting. Besides, under certain ambient brightness settings, it still has the advantage of reducing the power consumption of the 3D glasses. These alternative designs all obey the spirit of the present invention and fall within the scope of the present invention.

Please note that, in the exemplary embodiments shown in FIG. 2, FIG. 4, FIG. 6, FIG. 9 and FIG. 12, the adjusting circuit and control circuit receive needed information from the signal transmitter via the same signal receiver in the 3D glasses (i.e., the adjusting circuit and control circuit share the same signal receiver for signal reception). However, in other exemplary embodiment, a plurality of signal receivers may be utilized for receiving needed information from the signal transmitter separately. That is, the adjusting circuit and control circuit use different signal receivers to receive desired signals.

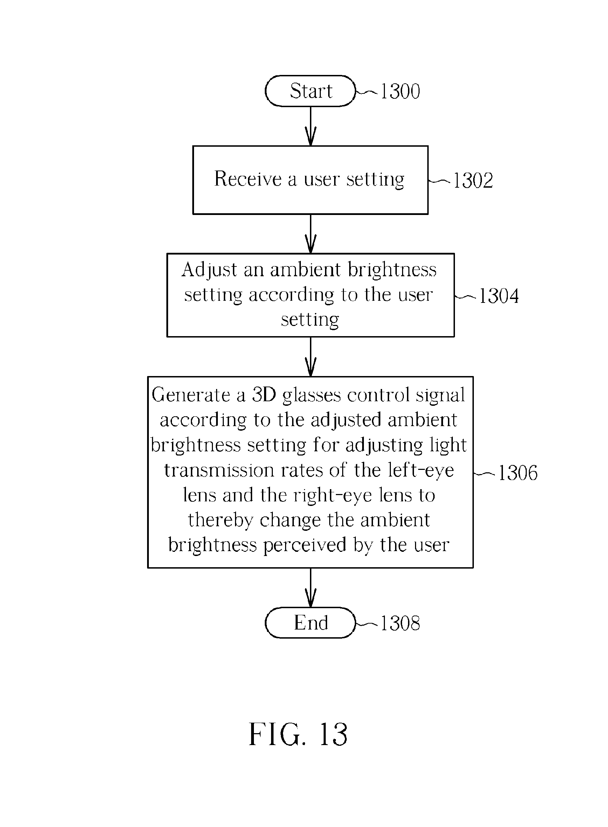

Please refer to FIG. 13, which is a flowchart of the first exemplary embodiment of a method used for controlling the ambient brightness perceived via 3D glasses according to the present invention. Provided that the result is substantially the same, the steps are not required to be executed in the exact order shown in FIG. 13. The exemplary method of adjusting the ambient brightness perceived via 3D glasses employs a manual adjusting mechanism, and may be briefly summarized as below:
- Step1300:: Start.
- Step1302:: Receive a user setting.
- Step1304:: Adjust an ambient brightness setting according to the user setting.
- Step1306:: Generate a 3D glasses control signal according to the adjusted ambient brightness setting for adjusting light transmission rates of the left-eye lens and the right-eye lens to thereby change the ambient brightness perceived by the user. For example, the adjustment may be made to the number of times the shutter lens entering the open state, the number of times the shutter lens entering the close state, the ratio of the shutter-open period to the shutter-close period, and/or the glasses cycle (i.e., the period that the left eye and right eye respectively view the image once).
- Step1308:: End.

Please note that FIG. 13 only shows that the ambient brightness is adjusted once. In fact, each time the user setting is received, the ambient brightness is adjusted according to the received ser setting. Since those skilled in the art will readily understand the operation of every step shown in FIG. 13 after reading above paragraphs directed to the stereo image display systems 100-500 shown in FIG. 1-FIG. 5, further description is omitted here for brevity.

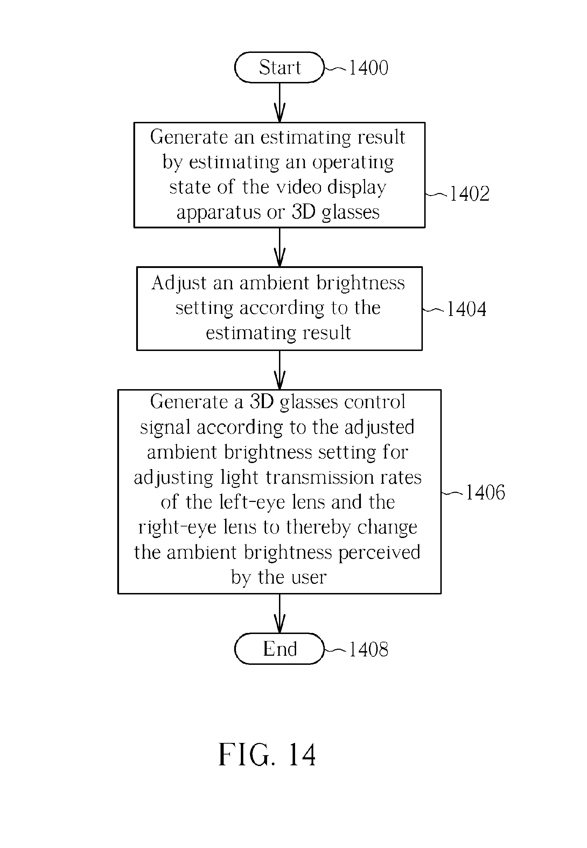

Please refer to FIG. 14, which is a flowchart of the second exemplary embodiment of a method used for controlling the ambient brightness perceived via 3D glasses according to the present invention. Provided that the result is substantially the same, the steps are not required to be executed in the exact order shown in FIG. 14. The exemplary method of adjusting the ambient brightness perceived via 3D glasses employs an automatic adjusting mechanism, and may be briefly summarized as below:
- Step1400:: Start.
- Step1402:: Generate an estimating result by estimating an operating state of the video display apparatus or 3D glasses.
- Step1404:: Adjust an ambient brightness setting according to the estimating result.
- Step1406:: Generate a 3D glasses control signal according to the adjusted ambient brightness setting for adjusting light transmission rates of the left-eye lens and the right-eye lens to thereby change the ambient brightness perceived by the user. For example, the adjustment may be made to the number of times the shutter lens entering the open state, the number of times the shutter lens entering the close state, the ratio of the shutter-open period to the shutter-close period, and/or the glasses cycle (i.e., the period that the left eye and right eye respectively view the image once).
- Step1408:: End.

Please note that FIG. 14 only shows that ambient brightness is adjusted once. In fact, each time an estimating result is generated according to the operating state of the video display apparatus/3D glasses, the ambient brightness is adjusted according to the estimating result. For example, when there is a change in the operating state of the video display apparatus/3D glasses, the automatic adjusting mechanism proposed in the present invention adjusts the ambient brightness perceived by the user via 3D glasses automatically. Since those skilled in the art will readily understand the operation of every step shown in FIG. 14 after reading above paragraphs directed to the stereo image display systems 600-1200 respectively shown in FIG. 6-FIG.12, further description is omitted here for brevity.

In summary, the user can perceive different ambient brightness via the 3D glasses under different operating modes through manually or automatically adjusting the ambient brightness setting of 3D glasses. In this way, the overall image viewing quality is greatly improved when the user wears the 3D glasses. For example, when the video output apparatus is operating under the refresh rate of 120 Hz, the percentage of a stabilization time (e.g., a vertical blanking interval (VBI)) within the whole glasses period is 16%, and the light transmission rate of the ambient light is 36% for the shutter lens staying in the open state, the brightness finally perceived by the user (i.e., the light transmission rate of the shutter lens) is in the range from 2.88% to 33.1% through properly controlling the left-eye shutter lens and the right-eye shutter lens to switch between the open state and the close state, for example, by employing one of the shutter lens control mechanisms disclosed in other U.S. patent applications mentioned above. In other words, compared to the ambient brightness perceived under the lowest light transmission rate of 2.88%, the ambient brightness can be improved to be at most 16 times as great as the original ambient brightness via a proper control of the shutter glasses. Besides, when the video output apparatus is operating under the refresh rate of 120 Hz, the percentage of the stabilization time (e.g., the vertical blanking interval) within the whole glasses period is 32%, and the light transmission rate of the ambient light is 36% for the shutter lens staying in the open state, the brightness finally perceived by the user (i.e., the light transmission rate of the shutter lens) is in the range from 5.76% to 30.2% through properly controlling the left-eye shutter lens and the right-eye shutter lens to switch between the open state and the close state, for example, by employing one of the shutter lens control mechanisms disclosed in the same inventor's other patent applications mentioned above. In other words, compared to the ambient brightness perceived under the lowest light transmission rate of 5.76%, the ambient brightness can be improved to be almost 6 times as great as the original ambient brightness via a proper control of the shutter glasses. Moreover, when the video output apparatus is operating under the refresh rate of 240 Hz, the percentage of an image output period of a secondary image within the whole glasses period is 50%, and the light transmission rate of the ambient light is 36% for the shutter lens staying in the open state, the brightness finally perceived by the user (i.e., the light transmission rate of the shutter lens) is in the range from 9% to 27% through properly controlling the left-eye shutter lens and the right-eye shutter lens to switch between the open state and the close state, for example, by employing one of the shutter lens control mechanisms disclosed in other U.S. patent applications mentioned above. In other words, compared to the ambient brightness perceived under the lowest light transmission rate of 9%, the ambient brightness can be improved to be at most 3 times as great as the original ambient brightness via a proper control of the shutter glasses. It should be noted that the values mentioned above are for illustrative purposes only, and are not meant to be limitations to the present invention.

All combinations and sub-combinations of the above-described features also belong to the invention.

## Claims

1. A method for controlling an ambient brightness perceived via three-dimensional (3D) glasses (102, 202, 302, 602, 702, 802, 1202) utilized for viewing stereo images presented by a video display apparatus (104, 204, 304, 404, 504, 604, 704, 904, 1004, 1204), the method **characterized by**:
adjusting an ambient brightness setting of the 3D glasses (102, 202, 302, 602, 702, 802, 1202); and
controlling the 3D glasses (102, 202, 302, 602, 702, 802, 1202) according to the ambient brightness setting in order to adjust the ambient brightness perceived via the 3D glasses (102, 202, 302, 602, 702, 802, 1202).

2. The method of claim 1, **characterized in that** the step of adjusting the ambient brightness setting of the 3D glasses (102, 202, 302, 602, 702, 802, 1202) comprises:
receiving a user setting directly by the 3D glasses (102, 202, 302, 602, 702, 802, 1202), wherein the user setting is utilized for adjusting the ambient brightness setting.

3. The method of claim 1, **characterized in that** the video display apparatus (104, 204, 304, 404, 504, 604, 704, 904, 1004, 1204) comprises a signal transmitter (124, 424, 524, 624, 824, 924, 1024, 1224) and a video output apparatus (122, 222, 322, 622, 722, 922, 1222), and the video output apparatus (122, 222, 322, 622, 722, 922, 1222) transmits information to the 3D glasses (102, 202, 302, 602, 702, 802, 1202) through the signal transmitter (124, 424, 524, 624, 824, 924, 1024, 1224);
and the step of adjusting the ambient brightness setting of the 3D glasses (102, 202, 302, 602, 702, 802, 1202) comprises:
receiving a user setting directly by one of the video output apparatus (122, 222, 322, 622, 722, 922, 1222) and the signal transmitter (124, 424, 524, 624, 824, 924, 1024, 1224), wherein the user setting is utilized for adjusting the ambient brightness setting.

4. The method of claim 1, **characterized in that** the step of adjusting the ambient brightness setting of the 3D glasses (102, 202, 302, 602, 702, 802, 1202) comprises:
generating an estimating result by estimating an operating state of the video display apparatus (104, 204, 304, 404, 504, 604, 704, 904, 1004, 1204), and adjusting the ambient brightness setting according to the estimating result; or
generating a first estimating result by estimating an operating state of the 3D glasses (102, 202, 302, 602, 702, 802, 1202), and adjusting the ambient brightness setting according to at least the first estimating result.

5. The method of claim 4, **characterized in that** the step of generating the estimating result by estimating the operating state of the video display apparatus (104, 204, 304, 404, 504, 604, 704, 904, 1004, 1204) comprises:
generating the estimating result according to a video content to be displayed on the video display apparatus (104, 204, 304, 404, 504, 604, 704, 904, 1004, 1204), a data transmitting interface that provides a video content to be displayed on the video display apparatus (104, 204, 304, 404, 504, 604, 704, 904, 1004, 1204), or a signal source that provides a video content to be displayed on the video display apparatus (104, 204, 304, 404, 504, 604, 704, 904, 1004, 1204).

6. The method of claim 4, **characterized in that** the step of generating the first estimating result by estimating the operating state of the 3D glasses (102, 202, 302, 602, 702, 802, 1202) comprises:
generating the first estimating result according to power supply information of the 3D glasses (102, 202, 302, 602, 702, 802, 1202); and
the step of adjusting the ambient brightness setting of the 3D glasses (102, 202, 302, 602, 702, 802, 1202) further comprises:
generating a second estimating result according to a video content to be displayed on the video display apparatus (104, 204, 304, 404, 504, 604, 704, 904, 1004, 1204); and
adjusting the ambient brightness setting according to at least the first estimating result comprises:
adjusting the ambient brightness setting according to the first estimating result and the second estimating result.

7. Three-dimensional (3D) glasses (102, 202, 302, 602, 702, 802, 1202) for viewing stereo images presented by a video display apparatus (104, 204, 304, 404, 504, 604, 704, 904, 1004, 1204) comprising:
a left-eye lens (112);
a right-eye lens (114);
and **characterized by**:
an adjusting circuit (116, 216, 1216), arranged to adjust an ambient brightness setting of the 3D glasses (102, 202, 302, 602, 702, 802, 1202); and
a control circuit (118, 318, 718), electrically connected to the adjusting circuit (116, 216, 1216), the left-eye lens (112), and the right-eye lens (114), the control circuit (118, 318, 718) arranged to control the left-eye lens (112) and the right-eye lens (114) according to the ambient brightness setting, thereby adjusting an ambient brightness perceived via the 3D glasses (102, 202, 302, 602, 702, 802, 1202).

8. The 3D glasses (102, 202, 302, 602, 702, 802, 1202) of claim 7, **characterized in that** the adjusting circuit (116, 216, 1216) is arranged to receive the ambient brightness setting of the 3D glasses (102, 202, 302, 602, 702, 802, 1202) from the video display apparatus (104, 204, 304, 404, 504, 604, 704, 904, 1004, 1204); or the adjusting circuit (116, 216, 1216) is arranged to receive a user setting directly, and adjust the ambient brightness setting according to the received user setting; or the adjusting circuit (116, 216, 1216) is arranged to generate an estimating result by estimating an operating state of the video display apparatus (104, 204, 304, 404, 504, 604, 704, 904, 1004, 1204), and adjust the ambient brightness setting according to the estimating result.

9. The 3D glasses (102, 202, 302, 602, 702, 802, 1202) of claim 8, **characterized in that** the adjusting circuit (116, 216, 1216) is arranged to generate the estimating result according to a video content to be displayed on the video display apparatus (104, 204, 304, 404, 504, 604, 704, 904, 1004, 1204), a data transmitting interface that provides a video content to be displayed on the video display apparatus (104, 204, 304, 404, 504, 604, 704, 904, 1004, 1204), or a signal source that provides a video content to be displayed on the video display apparatus (104, 204, 304, 404, 504, 604, 704, 904, 1004, 1204).

10. The 3D glasses (102, 202, 302, 602, 702, 802, 1202) of claim 7, **characterized in that** the adjusting circuit (116, 216, 1216) is arranged to generate a first estimating result by estimating an operating state of the 3D glasses (102, 202, 302, 602, 702, 802, 1202), and adjust the ambient brightness setting according to at least the first estimating result.

11. The 3D glasses (102, 202, 302, 602, 702, 802, 1202) of claim 10, **characterized in that** the adjusting circuit (116, 216, 1216) is arranged to generate the first estimating result according to power supply information of the 3D glasses (102, 202, 302, 602, 702, 802, 1202); or the adjusting circuit (116, 216, 1216) is further arranged to generate a second estimating result according to a video content to be displayed on the video display apparatus (104, 204, 304, 404, 504, 604, 704, 904, 1004, 1204), and adjust the ambient brightness setting according to the first estimating result and the second estimating result.

12. A video display apparatus (104, 204, 304, 404, 504, 604, 704, 904, 1004, 1204) collaborating with three-dimensional (3D) glasses (102, 202, 302, 602, 702, 802, 1202) for presenting stereo images, comprising:
a signal transmitter (124, 424, 524, 624, 824, 924, 1024, 1224); and
a video output apparatus (122, 222, 322, 622, 722, 922, 1222), arranged to transmit information to the 3D glasses (102, 202, 302, 602, 702, 802, 1202) via the signal transmitter (124, 424, 524, 624, 824, 924, 1024, 1224);
**characterized in that** one of the signal transmitter (124, 424, 524, 624, 824, 924, 1024, 1224) and the video output apparatus (122, 222, 322, 622, 722, 922, 1222) adjusts an ambient brightness setting of the 3D glasses (102, 202, 302, 602, 702, 802, 1202) in order to adjust an ambient brightness perceived via the 3D glasses (102, 202, 302, 602, 702, 802, 1202).

13. The video display apparatus (104, 204, 304, 404, 504, 604, 704, 904, 1004, 1204) of claim 12, **characterized in that** the video display apparatus (104, 204, 304, 404, 504, 604, 704, 904, 1004, 1204) is arranged to receive a user setting directly and adjust the ambient brightness setting of the 3D glasses (102, 202, 302, 602, 702, 802, 1202) according to the received user setting; or the signal transmitter (124, 424, 524, 624, 824, 924, 1024, 1224) is arranged to receive a user setting directly, and adjust the ambient brightness setting of the 3D glasses (102, 202, 302, 602, 702, 802, 1202) according to the received user setting; or one of the signal transmitter (124, 424, 524, 624, 824, 924, 1024, 1224) and the video output apparatus (122, 222, 322, 622, 722, 922, 1222) is arranged to generate the estimating result by estimating an operating state of the video display apparatus (104, 204, 304, 404, 504, 604, 704, 904, 1004, 1204), and adjust the ambient brightness setting according to the estimating result.

14. The video display apparatus (104, 204, 304, 404, 504, 604, 704, 904, 1004, 1204) of claim 13, **characterized in that** the one of the signal transmitter (124, 424, 524, 624, 824, 924, 1024, 1224) and the video output apparatus (122, 222, 322, 622, 722, 922, 1222) is arranged to generate the estimating result according to a video content to be displayed on the video display apparatus (104, 204, 304, 404, 504, 604, 704, 904, 1004, 1204), a data transmitting interface that provides a video content to be displayed on the video display apparatus (104, 204, 304, 404, 504, 604, 704, 904, 1004, 1204), or a signal source that provides a video content to be displayed on the video display apparatus (104, 204, 304, 404, 504, 604, 704, 904, 1004, 1204).

15. The video display apparatus (104, 204, 304, 404, 504, 604, 704, 904, 1004, 1204) of claim 12, **characterized in that** the one of the signal transmitter (124, 424, 524, 624, 824, 924, 1024, 1224) and the video output apparatus (122, 222, 322, 622, 722, 922, 1222) is arranged to generate a first estimating result by estimating an operating state of the 3D glasses (102, 202, 302, 602, 702, 802, 1202) to adjust the ambient brightness setting according to at least the first estimating result.

16. The video display apparatus (104, 204, 304, 404, 504, 604, 704, 904, 1004, 1204) of claim 15, **characterized in that** the one of the signal transmitter (124, 424, 524, 624, 824, 924, 1024, 1224) and the video output apparatus (122, 222, 322, 622, 722, 922, 1222)is arranged to generate the first estimating result according to power supply information of the 3D glasses (102, 202, 302, 602, 702, 802, 1202); or the other of the signal transmitter (124, 424, 524, 624, 824, 924, 1024, 1224) and the video output apparatus (122, 222, 322, 622, 722, 922, 1222) is arranged to generate a second estimating result according to a video content to be displayed on the video display apparatus (104, 204, 304, 404, 504, 604, 704, 904, 1004, 1204), and the one of the signal transmitter (124, 424, 524, 624, 824, 924, 1024, 1224) and the video output apparatus (122, 222, 322, 622, 722, 922, 1222) is arranged to adjust the ambient brightness setting according to the first estimating result and the second estimating result.
